(19) Europäisches Patentamt
European Patent Office
Office européen des brevets

(11) EP 3 553 104 B1

# (12) EUROPEAN PATENT SPECIFICATION

(45) Date of publication and mention of the grant of the patent:
**01.11.2023 Bulletin 2023/44**

(21) Application number: **17877873.4**

(22) Date of filing: **06.12.2017**

(51) International Patent Classification (IPC):
***C08G 18/09*** *(2006.01)* ***C09D 175/04*** *(2006.01)*
***C08G 18/02*** *(2006.01)* ***C08G 18/18*** *(2006.01)*
***C08G 18/28*** *(2006.01)* ***C08G 18/62*** *(2006.01)*
***C08G 18/73*** *(2006.01)* ***C08G 18/78*** *(2006.01)*
***C08G 18/79*** *(2006.01)*

(52) Cooperative Patent Classification (CPC):
(C-Sets available)
**C09D 175/04; C08G 18/092; C08G 18/097; C08G 18/1875; C08G 18/282; C08G 18/2825; C08G 18/6225; C08G 18/73; C08G 18/7837; C08G 18/792; C08G 18/798** (Cont.)

(86) International application number:
**PCT/JP2017/043811**

(87) International publication number:
**WO 2018/105653 (14.06.2018 Gazette 2018/24)**

## (54) POLYISOCYANATE COMPOSITION AND COATING COMPOSITION

POLYISOCYANATZUSAMMENSETZUNG UND BESCHICHTUNGSZUSAMMENSETZUNG

COMPOSITION DE POLYISOCYANATE ET COMPOSITION DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2016 JP 2016237386**

(43) Date of publication of application:
**16.10.2019 Bulletin 2019/42**

(73) Proprietor: **ASAHI KASEI KABUSHIKI KAISHA**
**Tokyo 100-0006 (JP)**

(72) Inventors:
- **KATAGAWA Hironori**
**Tokyo 101-8101 (JP)**
- **AZUMA Koichiro**
**Tokyo 101-8101 (JP)**

(74) Representative: **Strehl Schübel-Hopf & Partner**
**Maximilianstrasse 54**
**80538 München (DE)**

(56) References cited:
**EP-A1- 1 939 232**
**WO-A1-2014/208567**
**WO-A1-2016/170058**
**JP-A- S5 659 828**
**JP-A- S58 162 581**
**JP-A- 2003 055 433**
**JP-A- 2004 175 888**
**JP-A- 2004 175 888**
**JP-A- 2011 208 028**
**JP-A- 2013 224 350**
**JP-A- 2013 224 350**
**JP-A- 2015 127 368**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 175/04, C08K 5/21**

## Description

Technical Field

The present invention relates to a polyisocyanate composition and a coating composition.

Background Art

Urethane-based coating compositions containing polyisocyanate as a curing agent are widely used as coatings for automobiles, building interior materials, building exterior materials, and home appliances since their coating films have excellent chemical resistance, flexibility, and weather resistance. Among these, coatings obtained from polyisocyanates derived from aliphatic diisocyanates exhibit advantage effect of non-yellowing. Furthermore, isocyanurate polyisocyanate is well known as having excellent coating film physical properties such as weather resistance and chemical resistance, which is used in a field where these properties are required.

Regarding the isocyanurate polyisocyanate derived from aliphatic diisocyanate, especially 1,6-hexamethylene diisocyanate (hereinafter sometimes referred to as "HDI"), Patent Document 1 discloses that, for example, a polyisocyanate composition excellent in moisture stability can be obtained by adjusting the concentration of phosphorus in the polyisocyanate composition to fall within a certain range.

Patent Documents 2 and 3 respectively disclose that a polyisocyanate composition having a low viscosity and little generation of HDI monomer upon storage can be obtained by employing specific components in the composition and a specific component ratio.

Furthermore, Patent Document 4 discloses a polyisocyanate composition having a high solid content, a low viscosity and a low polar organic solvent dilutability, which is obtained by reacting monoalcohol with HDI to produce a urethane compound and then carrying out isocyanuration.

Patent Document 5 discloses a preparation method in which a proportion of isocyanurate increases by carrying out isocyanuration of aliphatic diisocyanate at a high reaction rate while suppressing a dimerization reaction (formation of uretdione).

Patent Document 6 discloses a method of producing polyisocyanate, in which a polymer substantially free of a high molecular weight polymer is obtained by performing a two-step reaction that a high molecular weight compound (1-nylon compound) is produced in the first step and then the high molecular weight compound is decomposed in the second step.

Citation List

Patent Literature

[Patent Document 1] Japanese Patent No. 4201582
[Patent Document 2] Japanese Patent No. 5178200
[Patent Document 3] Japanese Patent No. 5183206
[Patent Document 4] Japanese Patent No. 3065889
[Patent Document 5] Japanese Unexamined Patent Application, First Publication No. S58-162581
[Patent Document 6] Japanese Unexamined Patent Application, First Publication No. 2002-241458

EP 1939232 A1 discloses a polyisocyanate composition derived fom an aliphatic diisocyanate monomer such as hexamethylene diisocyanate, containing isocyanurate trimer, allophante groupsderived from alcohol and an uretdione dimer.

WO 2015/166983 A1 discloses a polyisocyanate composition comprising: a polyisocyanate obtained from at least one diisocyanate selected from the group consisting of an aliphatic diisocyanate and an alicyclic diisocyanate and having an isocyanurate group; and a polyisocyanate obtained from at least one diisocyanate selected from the group consisting of an aliphatic diisocyanate and an alicyclic diisocyanate and having an allophanate group.

JP S58162581 A discloses a preparation method for an isocyanurate compound of hexamethylene diisocyanate by isocyanating hexamethylene diisocyanate with an alcoholic or phenolic hydroxyl compound as a cocatalyst in the presence of a sodium or potassium salt of a fatty acid.

Summary of Invention

Technical Problem

However, the compositions disclosed by these Patent Documents still show insufficient chemical resistance. In particular, technologies disclosed in Patent Documents 2, 3 and 4 may sometimes deteriorate the chemical resistance, while technologies disclosed in Patent Documents 5 and 6 may cause muddiness during solvent dilution for coating application.

The present invention is made to provide a polyisocyanate composition, which has excellent solvent reducibility when used as a coating curing agent and is capable of providing good coating film physical properties including chemical resistance, with consideration of such problems.

Solution to Problem

The inventors have conducted intensive studies to solve the problems stated above, and have found that a coating film with good chemical resistance and excellent solvent-dilutability upon coating formation can be obtained using a polyisocyanate composition containing 1-nylon compound of a specific concentration as a coating curing agent, thereby achieving the present invention.

The present invention is set out in the appended claims.

Advantageous Effects of Invention

A polyisocyanate composition according is a first aspect of the present invention. The polyisocyanate composition is capable of achieving coating film physical properties including good chemical resistance and excellent solvent-dilutability upon coating formation can be obtained when used as a coating curing agent.

Brief Description of Drawings

FIG. 1 shows a refractive index measurement chart and a UV-absorption peak measurement chart, which are obtained as measurements result by gel permeation chromatography of polyisocyanate in Example. FIG. 1 demonstrates a measuring method of UV-absorption peak height ratio using the two charts.

Description of Embodiments

Hereinafter, modes for carrying out the present invention (hereinafter simply referred to as "present embodiment") will be described in detail. The present embodiment shown below is an example for showing the present invention, and it does not mean that the present invention is limited to the following examples. The present invention may be appropriately modified without departing from the scope of the claims.

The term "polyisocyanate" as used herein means a reaction product in which a plurality of compounds having one or more isocyanate groups (-NCO) are bonded. Furthermore, one molecule of the compound, which has one or more isocyanate groups (-NCO) constituting the polyisocyanate, may be referred to as a monomer.

The term "polyol" as used herein means a compound having two or more hydroxy groups (-OH).

(Polyisocyanate Composition)

A polyisocyanate composition of the present embodiment is a polyisocyanate composition including an isocyanurate structure, which is derived from diisocyanate. A multimer derived from 1-nylon compound having UV-absorption in a region corresponding to diisocyanate undecamer or higher-order multimers exists in a spectrum measured by gel permeation chromatography (GPC). Moreover, a height ratio (B)/(A) of a UV-absorption peak height (B) of the multimer derived from 1-nylon compound to a UV-absorption peak height of a diisocyanate trimer equivalent (A) is in a range of 1.0 to 20.5.

Components of the polyisocyanate composition of the present embodiment will be described below.

(Diisocyanate)

Diisocyanate from which the polyisocyanate composition of the present embodiment is derived is 1,6-hexamethylene diisocyanate (hereinafter sometimes referred to as "HDI"). The reaction can be carried out with HDI on a large industrial scale.

(Isocyanurate)

Polyisocyanate contained in the polyisocyanate composition of the present embodiment has an isocyanurate structure.

The term "isocyanurate structure" generally indicates a functional group derived from polyisocyanate consisting of three molecules of diisocyanate monomer, which is a structure represented by the following formula (I). Hereinafter, it may be referred to as an isocyanurate trimer.

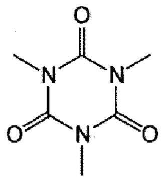

・・・(I)

<Multimer Derived from 1-Nylon Compound>

A multimer derived from 1-nylon compound is present in a fixed amount in the polyisocyanate composition of the present embodiment, from the viewpoint of developing chemical resistance and solvent-dilutability. An amount of the multimer is represented by a height ratio (B)/(A) in a spectrum measured by GPC, when a UV-absorption peak height of a diisocyanate trimer equivalent is (A) and a UV-absorption peak height of the multimer derived from 1-nylon compound having UV-absorption in a region corresponding to diisocyanate undecamer or higher-order multimers is (B).

The height ratio (B)/(A) is in a range of 1.0 to 20.5.

A lower limit of the height ratio (B)/(A) may be more preferably 3, particularly preferably 5, most preferably 15.

If the ratio is equal to or more than the lower limit, the polyisocyanate composition of the present embodiment exhibits chemical resistance. Moreover, as shown in the Example described below, in a case where the ratio is 1 or more, the polyisocyanate composition is particularly more excellent in coating film physical properties such as chemical resistance.

An upper limit of the height ratio (B)/(A) is 20.5.

If the ratio is equal to or less than the upper limit stated above, it is possible to obtain the polyisocyanate composition of the present embodiment in which both muddiness occurred during solvent dilution and unnecessary increase in viscosity can be suppressed.

(Other Components)

The polyisocyanate composition of the present embodiment may further contain polyisocyanate having an allophanate structure derived from alcohol, in addition to the polyisocyanate having the isocyanurate structure.

The term "allophanate structure" generally indicates a functional group formed by alcohol hydroxyl group and isocyanate group, which is a structure represented by the following formula (II).

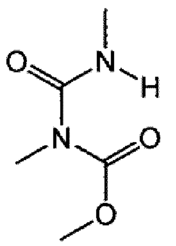

・・・(II)

In a case where the polyisocyanate composition of the present embodiment contains the polyisocyanate having the allophanate structure, a molar ratio (Y)/(X) of the allophanate structure (Y) to the isocyanurate structure (X) is preferably in a range of 0.1/100 to 50/100, more preferably in a range of 1/100 to 50/100, still more preferably in a range of 5/100 to 50/100, particularly preferably in a range of 5/100 to 20/100, most preferably in a range of 5/100 to 10/100.

If the molar ratio is equal to or more than the lower limit stated above, the resultant polyisocyanate composition has appropriately reduced viscosity and shows that the muddiness during solvent dilution tends to be better. Meanwhile, if the molar ratio is equal to or less than the upper limit stated above, crosslinkability tends to be better.

The polyisocyanate composition of the present embodiment further contains polyisocyanate having an uretdione

structure, in addition to the polyisocyanate having the isocyanurate structure.

The term "uretdione structure" generally indicates a functional group derived from polyisocyanate consisting of two molecules of diisocyanate monomer, which is a structure represented by the following formula (III).

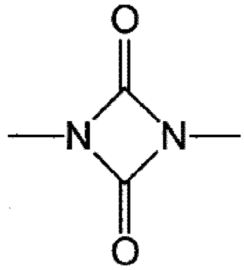

• • • (III)

The polyisocyanate composition of the present embodiment contains the polyisocyanate having the uretdione structure, and a molar ratio (Z)/(X) of the uretdione structure (Z) to the isocyanurate structure (X) is in a range of 0.01/100 to 40/100, more preferably in a range of 0.01/100 to 1/100, still more preferably in a range of 0.01/100 to 0.5/100.

If the molar ratio falls within the range stated above, it is possible to reduce viscosity of the polyisocyanate composition while suppressing solvent swelling resistance of the entire multilayer coating.

If the ratio (Y)/(X) is in a range of 0. 1/100 to 50/100 (preferably in a range of 5/100 to 50/100) and the ratio (Z)/(X) is in a range of 0.4/100 to 40/100, in a case where the ratio (B)/(A) is in a range of 1 to 30, as shown in Example described below, it is possible to obtain the polyisocyanate composition which is particularly excellent in surface resistance and swelling resistance, among the chemical resistance properties.

If the ratio (Y)/(X) is in a range of 0. 1/100 to 50/100 (preferably in a range of 5/100 to 50/100) and the ratio (Z)/(X) is in a range of 0.4/100 to 40/100 (preferably in a range of 1.2/100 to 40/100), or alternatively, if the ratio (Y)/(X) is 0.1/100 or more and less than 5/100 and the ratio (Z)/(X) is in a range of 0.4/100 to 40/100 (preferably in a range of 1.2/100 to 40/100), in a case where the ratio (B)/(A) is 0.1 or more and less than 1, as shown in Example described below, it is possible to obtain the polyisocyanate composition which shows further excellent solvent-dilutability when such a composition is used as a coating curing agent, while maintaining good coating film physical properties such as chemical resistance.

(Method of Producing Polyisocyanate Composition)

The polyisocyanate composition of the present embodiment can be prepared by isocyanurating the diisocyanate with an isocyanurate catalyst. Examples of the isocyanurate catalyst capable of being adopted in the present embodiment include acetic acid, propionic acid, butyric acid, valeric acid, caproic acid, heptanoic acid, caprylic acid, pelargonic acid, capric acid, lauric acid, myristic acid, palmitic acid, stearic acid, and Na salts, K salts and quaternary ammonium salts of these branched fatty acids. Examples of the quaternary ammonium include tetramethylammonium, tetrabutylammonium, butyltrimethylammonium, benzyltrimethylammonium, dibenzyldimethylammonium, and phenyltrimethylammonium.

The isocyanuration reaction temperature is preferably 70°C or less, more preferably in a range of 30°C to 67°C, still more preferably in a range of 35°C to 65°C.

If the isocyanuration reaction temperature is equal to or less than the upper limit stated above, the 1-nylon compound tends to be sufficiently generated for developing chemical resistance. Meanwhile, if the isocyanuration reaction temperature is equal to or more than the lower limit stated above, a reaction rate can be maintained moderately, which is preferred from the economical point of view.

The reaction time varies depending on amount of catalyst, amount of alcohol, a way how to add alcohol, reaction temperature and the like; it generally falls within a range of 1 hour to 6 hours. The amount of catalyst varies depending on amount of solvent and alcohol; it generally falls within a range of 0.001% to 0.05% with respect to raw material diisocyanate.

Exemplified factors to control the amount of 1-nylon compound existed in the polyisocyanate composition of the present embodiment include reaction temperature, reaction rate (amounts of catalyst and alcohol), post-treatment temperature, and yield.

The 1-nylon compound may be increased in the polyisocyanate composition of the present embodiment by means of lowering the reaction temperature at the first. In particular, the reaction temperature is preferably 70°C or less, more preferably 67°C or less, still more preferably 65°C or less.

1-nylon compound is efficiently produced by setting the reaction temperature up to the upper limit stated above. Furthermore, as the amount of catalyst and the amount of alcohol increase, the amount of the produced 1-nylon compound

increases.

A temperature at which a terminator is added is also preferably 70°C or less, more preferably 67°C or less, still more preferably 65°C or less, similar to the reaction temperature.

Moreover, the lower the yield is, the more the amount of 1-nylon compound formed in the finally obtained polyisocyanate composition is.

Examples of the alcohol capable of being adopted in the present embodiment include a phenolic hydroxy compound, and an alcoholic hydroxy compound.

Examples of the phenolic hydroxy compound include phenol, cresol, and trimethylphenol.

Examples of the alcoholic hydroxy compound include linear alkyl alcohol, branched alkyl alcohol, cyclic alkyl alcohol, and polyhydric alcohol.

Examples of the linear alkyl alcohol include methanol, ethanol, propanol, n-butanol, and hexanol.

Examples of the branched alkyl alcohol include iso-butanol, and ethylhexanol.

Examples of the cyclic alkyl alcohol include cyclohexanol

Examples of the polyhydric alcohol include ethylene glycol

The amount of alcohol is correlated with the amount of allophanate existed in the polyisocyanate composition of the present embodiment, and with the amount of produced 1-nylon compound, which is preferably in a range of 500 ppm to 30000 ppm with respects to the raw material diisocyanate.

If the amount of alcohol is equal to or less than the upper limit stated below, it is possible that an abundance ratio of the allophanate compound in the final polyisocyanate composition can be appropriately suppressed, which is preferred in view of expressing weather resistance and chemical resistance.

If the amount of alcohol is equal to or more than the lower limit stated above, the 1-nylon compound tends to be generated in an appropriate amount.

The alcohol may be added at a timing such that the alcohol is present in the reaction system during the isocyanuration reaction. In particular, the alcohol may be added before the isocyanuration reaction, simultaneously with the isocyanurate catalyst (the alcohol can be used as a diluent for the catalyst), or while the isocyanuration reaction proceeds after the isocyanurate catalyst is completely added. The alcohol may be added at any one of the timings or at every timing. The alcohol may be added all at once or continuously, provided that the continuous addition is preferred when the alcohol is added while the isocyanuration reaction proceeds from the viewpoint of controlling reaction and heat generation. In a case where the alcohol is added before the isocyanuration reaction, the alcohol is preferably added all at once in terms of economy.

For balancing chemical resistance, viscosity and muddiness inhabitation during dilution of the coating solvent, it is important to control the amount of the produced 1-nylon compound to fall within the appropriate range by combining these factors.

Since the decrease in NCO content accompanying with the progress of isocyanuration can be measured by titration analysis, the reaction may be terminated when the predetermined NCO content is achieved.

The NCO content, and the viscosity of the isocyanurated diisocyanate polymer can be freely tailored depending on the NCO content when the reaction is terminated.

An acidic compound is exemplified as a reaction terminator. Specific examples of the reaction terminator include hydrochloric acid, phosphoric acid, dimethyl phosphate, diethyl phosphate, dibutyl phosphate, di 2-ethylhexyl phosphate, dicyclohexyl phosphate, p-toluenesulfonic acid, benzenesulfonic acid, alkylbenzenesulfonic acid, acetyl chloride, benzoyl chloride, and analogous compounds thereof.

The reaction terminator is added in preferably 0.5 to 10 times molar amount, more preferably 1 to 8 times molar amount, per 1 mol of carboxylic acid content in the catalyst.

In a case where a soluble terminator is used in the mixed solution of raw material diisocyanate monomer and polyisocyanate produced by the reaction, the terminator may be added about 1 time molar amount per 1 mol of carboxylic acid content in the catalyst. Meanwhile, in a case where an insoluble reaction terminator is used, the reaction terminator is likely to be required in 2 to 8 times molar amount per 1 mol of carboxylic acid content in the catalyst.

After the reaction terminator is added, heat curing may be carried out to complete the termination reaction. In a case where the heat curing is carried out, the heat-curing temperature is preferably in a range of 80°C to 150°C, more preferably in range of 80°C to 130°C, still more preferably in a range of 90°C to 120°C.

If the temperature is equal to or less than the upper limit stated above, it is preferred since the 1-nylon compound increases in the obtained polyisocyanate composition, the chromaticity is reduced and the increase in viscosity due to the progress of multimerization is prevented.

If the temperature is equal to or more than the lower limit stated above, it is possible to accelerate the growth of salts formed by the termination reaction. Especially in a case where the catalyst forming an insoluble salt is combined with the reaction terminator, salts with a separable size by filtration tend to be formed, which is economically preferred.

The optimal heat-curing time varies depending on the temperature; however, it is preferably in a range of 10 to 120 minutes, more preferably in a range of 10 to 90 minutes, still more preferably in a range of 10 to 60 minutes.

Although the heat-curing time varies depending on the temperature, if the heat-curing time is equal to or less than the upper limit stated above, it is preferred since the coloring and the increase in viscosity due to the further multimerization of polyisocyanate tend to be prevented.

If the heat-curing time is equal to or more than the lower limit stated above, it is preferred since the salts are sufficiently formed and grown, and the insoluble salts are easily separated by filtration.

In general, the diisocyanate content in the product (that is, the polyisocyanate composition of the present embodiment) is preferably 0.5% by mass or less with consideration of its toxicity.

In a case where trimers or polycyclic compounds of higher order are present in a large amount in the polyisocyanate composition of the present embodiment, compatibility with the solvent is lowered to cause white muddiness in addition to problems in physical properties such as viscosity and hardness. Therefore, it is preferred to adjust the reaction using the reaction terminator so that the NCO group content in a polymerization solution after distillation is about 20% by mass.

The diisocyanate content in the product (that is, the polyisocyanate composition of the present embodiment) can be measured by gas chromatography. Moreover, the trimer in the product (that is, the polyisocyanate composition of this embodiment) can be measured by liquid chromatography.

For example, in a case where the diisocyanate is HDI, the trimer can be quantified because it appears clearly around the molecular weight of 504 (molecular weight of HDI (about 168) × 3). In addition, the isocyanurate structure exhibits a clear absorption near 1680 $cm^{-1}$ by infrared absorption spectrum.

The polycyclic compound content in the product (that is, the polyisocyanate composition of the present embodiment) can also be quantified by the same method. Moreover, the dimer formation can be confirmed by the absorption near 1780 $cm^{-1}$ in the infrared absorption spectrum.

Moreover, suitably exemplified manufacturing methods of the polyisocyanate composition of the present invention embodiment include a method of carrying out isocyanuration using a polyol adduct in which a part of diisocyanate is urethaneized, on the same conditions as stated above.

The urethanation reaction to form a polyol adduct can be achieved that polyol is added to the diisocyanate by a commonly practiced method and the reaction is carried out with the reaction temperature of 100°C or less, preferably in a range of 70°C to 90°C, for about 2 hours.

If the reaction temperature is equal to or less than the upper limit stated above, it is preferred since coloration of products or occurrence of side reactions can be suppressed.

A bifunctional or trifunctional polyol having a molecular weight of 3000 or less is suitable as polyol used for urethanization. Specific examples of polyol include diol, and triol. The polyol may be a mixture of these polyols.

Examples of the diol include dihydric alcohol, polyester polyol, and polyether polyol.

Examples of the dihydric alcohol include ethylene glycol, diethylene glycol, 1,3-butanediol (hereinafter sometimes referred to as "1,3-BG"), 1,4-butanediol, propylene glycol, dipropylene glycol, neopentyl glycol, and 1,6-hexane glycol (hereinafter sometimes referred to as "1,6-HG").

Examples of the triol include trihydric alcohol, polyester polyol, and polyether polyol.

Examples of the trihydric alcohol include glycerin, trimethylol ethane, and trimethylol propane.

(Coating Composition)

Next, a coating composition containing the polyisocyanate composition of the present embodiment will be described.

That is, the coating composition of the present embodiment contains the polyisocyanate composition of the embodiment stated above and at least one polyol composition. For example, the coating composition of the present embodiment can be produced by mixing the polyisocyanate composition obtained as stated above and a polyol composition containing two or more hydroxyl groups having reactivity with isocyanate groups in the molecule. These components interactively react to form a crosslinked coating.

(Polyol Composition)

The polyol composition is not particularly limited, and examples thereof include acrylic polyol, polyester polyol, polyether polyol, polyolefin polyol, epoxy polyol, and fluorine polyol.

Among these, the polyol composition is preferably acrylic polyol, polyester polyol, or polyether polyol.

(Acrylic Polyol)

The acrylic polyol is not particularly limited, and examples thereof include acrylic polyol, which is obtained by polymerization using monomer(s) selected from the group shown in (i) alone or in combination and monomer(s) selected

from the group shown in (ii) alone or in combination, in the presence or absence of other polymerizable monomer(s) selected from the group shown in (iii) alone or in combination.

(i) Acrylic acid ester having active hydrogen, acrylic acid monoester or methacrylic acid monoester of glycerin, and acrylic acid monoester or methacrylic acid monoester of trimethylolpropane.

Examples of the acrylic acid ester having active hydrogen includes acrylic acid 2-hydroxyethyl, acrylic acid 2-hydroxypropyl, acrylic acid 2-hydroxybutyl, and the like.
(ii) Acrylic acid ester, methacrylic acid ester with active hydrogen, and methacrylic acid ester.
Examples of the acrylic acid ester include methyl acrylate, ethyl acrylate, isopropyl acrylate, n-butyl acrylate, and 2-ethylhexyl acrylate.
Examples of the methacrylic acid ester with active hydrogen include ester 2-hydroxyethyl methacrylate, 2-hydroxypropyl methacrylate, methacrylic acid 2-hydroxybutyl, methacrylic acid 3-hydroxypropyl, and methacrylic acid 4-hydroxybutyl,
**[0096]** Examples of the methacrylic acid ester include methyl methacrylate, ethyl methacrylate, isopropyl methacrylate, n-butyl methacrylate, isobutyl methacrylate, n-hexyl methacrylate, and lauryl methacrylate.
(iii) Unsaturated carboxylic acid, unsaturated amide, glycidyl methacrylate, styrene, vinyl toluene, vinyl acetate, acrylonitrile, and dibutyl fumarate.
Examples of the unsaturated carboxylic acid include acrylic acid, methacrylic acid, maleic acid, and itaconic acid.
Examples of the unsaturated amide include acrylamide, N-methylol acrylamide, and diacetone acrylamide.

(Polyester Polyol)

The polyester polyol is not particularly limited, and examples thereof include polyester polyol obtained by condensation reaction between dibasic acid(s) selected from the group shown in (iv) alone or in combination with polyhydric alcohol(s) selected from the group shown in (v) alone or in combination.
(iv) Succinic acid, adipic acid, sebacic acid, dimer acid, maleic anhydride, phthalic anhydride, isophthalic acid, and terephthalic acid.
(v) Ethylene glycol, propylene glycol, diethylene glycol, neopentyl glycol, trimethylolpropane and glycerin
These polyester polyols can be modified with aromatic diisocyanates, aliphatic diisocyanates, alicyclic diisocyanates, and polyisocyanates obtained therefrom. In this case, particularly preferred are polyester polyols modified with aliphatic diisocyanates, alicyclic diisocyanates, and polyisocyanates obtained therefrom from the viewpoint of wether resistance and yellowing resistance.

(Polyether Polyol)

The polyether polyol is not particularly limited, and examples thereof include polyether polyol obtained by random addition or block addition of alkylene oxide(s) selected from the group shown in (viii) alone or in combination to polyol(s), having a molecular weight of 500 or less, alone or in combination by means of catalyst(s) selected from the group shown in (vi) alone or in combination.
(vi) Strongly basic catalyst and complex metal cyanide complex
Examples of the strongly basic catalyst include hydroxides such as lithium, sodium or potassium, alcoholates, alkylamines, and the like.
Examples of the complex metal cyanide complex include metal porphyrin, and zinc hexacyanocobaltate complex.
(viii) Ethylene oxide, propylene oxide, butylene oxide, cyclohexene oxide, and styrene oxide
Examples of the polyether polyol include polyether polyols obtained by reacting alkylene oxides with polyamine compounds such as ethylene diamines, "so-called" polymer polyols obtained by polymerizing acrylamide using the polyether polyol obtained by the method stated above as a medium.

(Polyolefin Polyol)

The polyolefin polyol is not particularly limited, and examples thereof include polybutadiene having two or more hydroxyl groups, hydrogenated polybutadiene having two or more hydroxyl groups, polyisoprene having two or more hydroxyl groups, and hydrogenated polyisoprene having two or more hydroxyl groups.

(Epoxy Polyol)

The epoxy polyol is not particularly limited, and examples thereof include epoxy polyols of Novolac type, β-methyl epichloro type, cyclic oxirane type, glycidyl ether type, glycol ether type, epoxy type of unsaturated aliphatic compound, epoxidized fatty acid ester type, polyvalent carboxylic acid ester type, aminoglycidyl type, halogenated type, resorcinol type; compounds modified with these amino compounds or polyamide compounds.

(Fluorine Polyol)

The fluorine polyol indicates a polyol containing fluorine in the molecule. The fluorine polyol is not particularly limited, and examples thereof include copolymers such as fluoroolefin, cyclohexyl vinyl ether, hydroxyalkyl vinyl ether, monocarboxylic acid vinyl ester or the like, as disclosed in United States Patent No. 4345057 and European Patent No. 180962.

In the present embodiment, a hydroxyl value of the polyol composition used as a component of the coating composition is preferably in a range of 30 mgKOH/g to 200 mgKOH/g. Moreover, it is preferred that an acid value of the polyol composition is in a range of 0 mgKOH/g to 30 mgKOH/g. These polyol compositions may be a combination of two or more polyols mentioned above. Among these, the polyol composition to be used has the hydroxyl value of preferably in a range of 70 mgKOH/g to 165 mgKOH/g, and the acid value of preferably in a range of 2 mgKOH/g to 20 mgKOH/g.

In a case where a coating composition is prepared using the polyisocyanate composition of the present embodiment, it is preferred that a molar ratio of the isocyanate group of the polyisocyanate composition to the hydroxyl group of the polyol composition is appropriately selected from a range of 1/2 to 2/1.

(Other Components)

Furthermore, various solvents, ultraviolet absorbers, light stabilizers, organic pigments, inorganic pigments, metallic pigments, light interference pigments, and curing accelerators can be blended depending on the application and purpose of the coating composition.

Examples of the ultraviolet absorber include benzotriazole, and benzophenone.

Examples of the light stabilizer include hindered amine, and hindered phenols.

Examples of the organic pigment include quinacridone, pigment red, and phthalocyanine blue.

Examples of the inorganic pigment include titanium oxide, and carbon black.

Examples of the metallic pigment include aluminum powder

Examples of the light interference pigment include pearl mica powder

Examples of the curing accelerator include tin compound, zinc compound, and amine compound.

The solvent is not particularly limited but can be selected appropriately from the group consisting of ketones, esters, butanol, and alcohols in accordance with the purpose and application. These solvent may be used alone or in combination.

Examples of the ketones include acetone, methyl ethyl ketone, and methyl isobutyl ketone.

Examples of the esters include ethyl acetate, n-butyl acetate, and cellosolve acetate.

Examples of the alcohols include isopropyl alcohol.

The coating composition thus prepared can be used in, for example, roll coating, curtain flow coating, and spray coating, which is usually applied at a dry film thickness in a range of about 10 μm to 100 μm. In particular, the coating composition is useful in the field of car repair paint, and plastic paint. Moreover, the coating composition of the present embodiment can also be used for a clear coat.

Examples

The present embodiment will be further described referring to examples, but is not limited thereto.

(Measuring Methods of Various Test Items)

(1) Measurement of Isocyanate Group Concentration

The isocyanate group concentration of the polyisocyanate is defined as the content (mass%) of isocyanate groups contained in the polyisocyanate, which was measured by the following method.

5 to 10 g of polyisoacylate was precisely weighed and dissolved in 20 mL of toluene. 20 mL of 2N solution of n-dibutylamine in toluene was added to the obtained solution, and the reaction was carried out at room temperature for

15 minutes. After the reaction was completed, entire amount of the obtained reaction mixture was subjected to back titration with 1N hydrochloric acid using an APB-410 type automatic titrator (manufactured by Kyoto Denshi Co., Ltd.). Thereby, a volume (sample titer) of 1N hydrochloric acid required for neutralization of unreacted n-dibutylamine in the reaction mixture was determined. Meanwhile, the same operation as stated above was carried out except that polyisocyanate was not used, and a volume (blank titer) of 1N hydrochloric acid required for neutralization of unreacted n-dibutylamine was similarly determined. The isocyanate group concentration (% by mass) was determined from the sample mass, sample titer and blank titer using the following equation (1).

$$\text{Isocyanate group concentration (\% by mass)} = [\{\text{blank titer (ml)} - \text{sample titer (ml)}\} \times 42/\{\text{sample mass (g)} \times 1000\}] \times 100 \qquad (1)$$

(2) Measurement of Diisocyanate Monomer

An area of a peak having a retention time corresponding to a molecular weight of the diisocyanate monomer was determined by gel permeation chromatography (GPC) with measurement conditions described below. A percentage with respect to the total area of all peaks in the chromatogram of this peak area was calculated as the diisocyanate monomer concentration (mass%).

(Measurement Conditions)

- Carrier: tetrahydrofuran (hereinafter sometimes simply referred to as "THF")
- Flow rate: 0.6 mL/min
- Column: columns "TSKgel SuperH1000", "TSKgel SuperH2000" and "TSKgel SuperH3000" (collectively manufactured by Tosoh Corporation) are connected in series
- Detector: refractometer
- GPC apparatus: "HLC-8120GPC" (manufactured by Tosoh Corporation)

(3) Measurement of Height Ratio of UV-Absorption Peak

FIG. 1 shows a refractive index measurement chart and a UV-absorption peak measurement chart, which are obtained as measurements result by gel permeation chromatography of the polyisocyanate. A specific method of measuring the height ratio of the UV-absorption peak will be described below with reference to FIG. 1.

A height (A) of a UV-absorption peak at retention time (about 11.7 minutes) corresponding to a molecular weight of the diisocyanate trimer, and a height (B) of a UV-absorption peak at a retention time (UV-absorption peak with retention time less than 10 minutes) corresponding to the molecular weight of multimers derived from 1-nylon compound were calculated according to the GPC measurement conditions described below. The retention time corresponding to each molecular weight also varies depending on the GPC model and measurement conditions. Measurement was carried out on polyisocyanates mainly containing isocyanurate compound and peaks corresponding to trimer, pentamer, heptamer, and nonamer were identified in the refractive index chart, thereby specifying the retention time to a molecular weight of any of trimer to nonamer from a position of each peak top. A region to the left of the nonamer peak (a region with a short retention time) corresponded to a polyisocyanate region having a molecular weight of undecamer and higher-order multimers. No peak or only an extremely small peak was observed in such a region in the refractive index chart; however, a large peak, which is a peak of the multimer derived from 1-nylon compound, was observed in the UV (254 nm) chart. This peak may not be observed as a shape with a clear peak top (for example, a shape such as trapezoidal shape that cannot uniquely identify the peak position) in the UV chart depending on the synthesis method. In such a case, the highest portion in the region having a molecular weight of undecamer or higher-order multimers was taken as the peak height. (B)/(A) was calculated based on the obtained peak heights, and the UV-absorption peak height ratio of the multimer derived from 1-nylon compound to the diisocyanate trimer was determined.

(Measurement Conditions)

- Carrier: THF

- Flow rate: 0.6 mL/min
- Column: columns "TSKgel SuperH1000", "TSKgel SuperH2000" and "TSKgel SuperH3000" (collectively manufactured by Tosoh Corporation) are connected in series
- Detector: UV (used for height ratio calculation) (measurement wavelength: 254 nm)

refractometer (used to identify isocyanurate trimer)

- GPC apparatus: "HLC-8120GPC" (manufactured by Tosoh Corporation)

(4) Measurement of Viscosity

The viscosity was measured at 25°C using VISCONIC ED-type or E-type viscometer (manufactured by Tokyo Keiki, Co., Ltd.).

(5) Measurement of Molar Ratio of Allophanate Structure (Y)/Isocyanurate Structure (X), or of Uretdione Structure (Z)/Isocyanurate Structure (X)

$CDCl_3$ solution of various polyisocyanate compositions was prepared, and $^{13}C$-NMR measurement was performed under the following measurement conditions. A ratio (molar ratio) of the allophanate structure or the uretdione structure based on "100" of the isocyanurate structure, (Y)/(X) or (Z)/(X), was calculated from the integral value of each signal. "/100" is omitted in Tables 1 to 5.

(Measurement Conditions)

- Measuring device: Burker Biospin Avance 600
- Observation nucleus: $^{13}C$ (150 MHz)
- Solvent: $CDCl_3$
- Integration count: 10000
- Chemical shift standard: $CDCl_3$ (77 ppm)

Uretdione structure: strong peak near 157.3 ppm

(6) Chemical Resistance Test

A coating composition having a formulation as shown below was prepared, applied on a glass plate to have a dry film thickness of 15 to 20 μm, and left at room temperature for 20 minutes. The coating was baked at 120°C for 20 minutes to obtain a urethane coating film.

(Coating Formulation)

- Polyisocyanate: various polyisocyanate compositions
- Polyol: Setalux 1767 (acrylic polyol, manufactured by Nuplex Resins)
- Blending ratio: NCO/OH = 1.05
- Dilution solvent: butyl acetate
- Solid content of coating: 50%

An absorbent cotton impregnated with methyl ethyl ketone was placed on the resultant urethane coating film for 30 minutes. The absorbent cotton was removed and a glass plate was placed on a black plate. Changes in appearance (white muddiness, glossiness, tack occurrence and swelling) of the coating film were evaluated with visual check and palpation. The evaluation criteria are as follows.

(Evaluation Criteria)

- No change: A
- Slightly changed (return to original state after solvent volatilization): B
- Slightly changed (traces remain even after solvent volatilization): C
- Clearly changed (traces of change in coating film remain after solvent volatilization): D

(7) Muddiness during Ethyl Acetate Dilution (NTU)

It was measured at 25°C and measurement wavelength 860 nm using, turbidimeter/colorimeter "2100AN" (manufactured by HACH).

(Adjustment of Measurement Sample)

- Solvent: ethyl acetate
- Dilution degree: polyisocyanate/ethyl acetate = 50% by mass/50% by mass

(Evaluation Criteria)

- 0.0 or more and less than 0.2: A (particularly excellent)
- 0.2 or more and less than 0.4: B (good)
- 0.4 or more and less than 0.6: C (no problem in practical use)
- 0.6 or more: D (potential problems in practical use)

(8) Coloration Degree (APHA) of Polyisocyanate Composition Hazen scale (APHA) of each polyisocyanate composition was measured using a Lovibond automatic colorimeter PFXi-195.

(Evaluation Criteria)

APHA of 14 or less: A
APHA falling within a range of 15 to 24: B
APHA falling within a range of 25 to 30: C (no problem in practical use)
APHA of 31 or more: D (potential problems in practical use depending on application)

(9) Xylene Tolerance and Xylene Swellability of Multilayer Coating Surface

A coating composition having a formulation A as shown below was prepared, applied on a glass plate to have a dry film thickness of 15 to 20 μm, and left at room temperature for 20 minutes. The coating was baked at 80°C for 20 minutes to obtain a urethane coating film. A coating composition having a formulation B as shown below was prepared, applied on the coating film obtained above to have a dry film thickness of 15 to 20 μm, and left at room temperature for 20 minutes. The coating was baked at 120°C for 30 minutes to obtain a multilayer coating film.

(Coating Formulation A)

- Polyisocyanate: various polyisocyanate compositions
- Polyol: Setalux 1767 (acrylic polyol, manufactured by Nuplex Resins)
- Blending ratio: NCO/OH = 0.6
- Dilution solvent: butyl acetate
- Solid content of coating: 50%

(Coating Formulation B)

- Polyisocyanate: various polyisocyanate compositions
- Polyol: Setalux 1767 (acrylic polyol, manufactured by Nuplex Resins)
- Blending ratio: NCO/OH = 1.50
- Dilution solvent: butyl acetate
- Solid content of coating: 50%

An absorbent cotton impregnated with xylene was placed on the resultant multilayer coating film for 30 minutes. The absorbent cotton was removed and a glass plate was placed on a black plate. Changes in appearance (white muddiness, glossiness, tack occurrence and swelling) of the coating film were evaluated with visual check and palpation. The evaluation criteria are as follows.

(Evaluation Criteria)

(Xylene Tolerance)

- No change: A
- Changed (return to original state after xylene is volatilized): B
- Changed (traces remain even after xylene is volatilized): C
- Clearly changed (traces of change in coating film remain after xylene is volatilized): D

(Xylene Swellability)

- No change: A
- Swollen slightly but no flaw such as wrinkle on coating film: B
- Swollen, and tiny defects such as slight wrinkles on coating film: C
- Heavily swollen, and lots of wrinkles on coating film: D

Example 1 (reference example): Preparation of Polyisocyanate Composition PI-1

100 parts of HDI was weighed and charged into a 1 L four-necked glass flask equipped with a thermometer, a stirrer and a nitrogen seal tube. Air in the flask was replaced with nitrogen. The flask was heated to 65°C. 0.35 parts of 2-ethylhexanol (hereinafter sometimes referred to as "2-EHOH") was added and the mixture was stirred for 10 minutes. 5% isobutanol (hereinafter sometimes referred to as "i-BuOH") solution of tetramethylammonium caprate (hereinafter sometimes referred to as "TMACA") was added until the content of TMACA reached 0.006 parts. The addition rate was 0.0001 parts/min as TMACA. The temperature was adjusted to 65 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-1. The obtained polyisocyanate composition was almost colorless and transparent. The data on the physical properties of the polyisocyanate composition such as the NCO content, viscosity, and free HDI concentration, and the coating film physical properties were summarized as shown in Table 1.

Examples 2 to 4 (Examples 3 and 4 for reference): Preparation of Polyisocyanate Compositions PI-2 to PI-4

Polyisocyanate compositions PI-2 to PI-4 were obtained in the same manner as in Example 1, except that the parameters including reaction temperature, catalyst amount, catalyst concentration and terminator addition temperature were adjusted as listed in Table 1. The obtained polyisocyanate compositions were almost colorless and transparent. The data on the physical properties of the polyisocyanate compositions such as the NCO content, viscosity, and free HDI concentration, and the coating film physical properties were summarized as shown in Table 1.

Example 5 (reference example): Preparation of Polyisocyanate Composition PI-5

100 parts of HDI was weighed and charged into a 1 L four-necked glass flask equipped with a thermometer, a stirrer and a nitrogen seal tube. Air in the flask was replaced with nitrogen. The flask was heated to 50°C. 0.35 parts of 2-EHOH was added and the mixture was stirred for 10 minutes. 2.6% i-BuOH solution of TMACA was added over 60 minutes until the content of TMACA reached 0.003 parts. After TMACA was completely added, 0.114 parts of i-BuOH was added over 30 minutes. The temperature was adjusted to 50 ± 2°C during the reaction. After i-BuOH was completely added, the temperature of the reaction solution was raised to 60°C. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-5. The obtained polyisocyanate composition was almost colorless and transparent. The data on the physical properties of the polyisocyanate composition such as the NCO content, viscosity, and free HDI concentration, and the coating film physical properties were summarized as shown in Table 1.

Example 6 (reference example): Preparation of Polyisocyanate Composition PI-6

100 parts of HDI was weighed and charged into a 1 L four-necked glass flask equipped with a thermometer, a stirrer and a nitrogen seal tube. Air in the flask was replaced with nitrogen. The flask was heated to 40°C. 5.0% i-BuOH solution of TMACA was added over 30 minutes until the content of TMACA reached 0.006 parts. The temperature was adjusted to 40 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-6. The obtained polyisocyanate composition was almost colorless and transparent. The data on the physical properties of the polyisocyanate composition such as the NCO content, viscosity, and free HDI concentration, and the coating film physical properties was summarized as shown in Table 1.

Example 7: Preparation of Polyisocyanate Composition PI-7

100 parts of HDI was weighed and charged into a 1 L four-necked glass flask equipped with a thermometer, a stirrer and a nitrogen seal tube. Air in the flask was replaced with nitrogen. The flask was heated to 40°C. 47.0% i-BuOH solution of TMACA was added over 5 minutes until the content of TMACA reached 0.018 parts. The temperature was adjusted to 40 ± 2°C during the reaction. When the target NCO% was achieved, 0.036 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-7. The obtained polyisocyanate composition was almost colorless and transparent. The data on the physical properties of the polyisocyanate composition such as the NCO content, viscosity, and free HDI concentration, and coating film physical properties was summarized as shown in Table 1.

Example 8: Preparation of Polyisocyanate Composition PI-8

100 parts of HDI was weighed and charged into a 1 L four-necked glass flask equipped with a thermometer, a stirrer and a nitrogen seal tube. Air in the flask was replaced with nitrogen. The flask was heated to 60°C. 0.35 parts of 2-EHOH was added and the mixture was stirred for 10 minutes. 5.0% i-BuOH solution of TMACA was added until the content of TMACA reached 0.003 parts. The addition rate was 0.0001 parts/min as TMACA. After TMACA was completely added, 0.057 parts of i-BuOH was added over 30 minutes. The temperature was adjusted to 60 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-8. The obtained polyisocyanate composition was almost colorless and transparent. The data on the physical properties of the polyisocyanate composition such as the NCO content, viscosity, and free HDI concentration, and the coating film physical properties were summarized as shown in Table 2.

Examples 9 (reference example) and 10: Preparation of Polyisocyanate Compositions PI-9 and PI-10

Polyisocyanate compositions PI-9 and PI-10 were obtained in the same manner as in Example 8, except that the parameters including catalyst concentration, catalyst amount, and amount of i-BuOH added after TMACA was completely added were adjusted as listed in Table 2. The obtained polyisocyanate compositions were almost colorless and transparent. The data on the physical properties of the polyisocyanate compositions such as the NCO content, viscosity, and free HDI concentration, and the coating film physical properties were summarized as shown in Table 2.

Example 11 (reference example): Preparation of Polyisocyanate Composition PI-11

100 parts of HDI was weighed and charged into a 1 L four-necked glass flask equipped with a thermometer, a stirrer and a nitrogen seal tube. Air in the flask was replaced with nitrogen. The flask was heated to 65°C. 50% i-BuOH solution of TMACA was added over 2 minutes until the content of TMACA reached 0.005 parts. After TMACA was completely added, a mixed alcohol of 0.35 parts of 2-EHOH and 0.109 parts of i-BuOH was added over 60 minutes. The temperature was adjusted to 65 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-11. The obtained polyisocyanate composition was almost colorless and transparent. The data on the physical properties of the polyisocyanate composition such as the NCO content, viscosity, and free HDI concentration, and the coating film physical properties were summarized as shown in Table 2.

Examples 12 and 13: Preparation of Polyisocyanate Compositions PI-12 and PI-13

Polyisocyanate compositions PI-12 and PI-13 were obtained in the same manner as in Example 11, except that the parameters including reaction temperature, catalyst amount, and terminator addition temperature were adjusted as listed in Table 2, and the mixed alcohol of 2-EHOH and i-BuOH, to be added after TMACA was completely added, was mixed in a ratio of 2-EHOH/i-BUOH = 0.35 parts/0.1315 parts. Furthermore, i-BuOH solution of TMACA was added over 2 minutes. The obtained polyisocyanate compositions were almost colorless and transparent. The data on the physical properties of the polyisocyanate compositions such as the NCO content, viscosity, and free HDI concentration, and the coating film physical properties were summarized as shown in Table 2.

Comparative Example 1: Preparation of Polyisocyanate Composition PI-15

100 parts of HDI was weighed and charged into a 1 L four-necked glass flask equipped with a thermometer, a stirrer and a nitrogen seal tube. Air in the flask was replaced with nitrogen. The flask was heated to 60°C. 2% i-BuOH solution of TMACA was added over 20 minutes until the content of TMACA reached 0.002 parts. The temperature was adjusted to 60 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-15. The obtained polyisocyanate composition was almost colorless and transparent. The data on the physical properties of the polyisocyanate composition such as the NCO content, viscosity, and free HDI concentration, and the coating film physical properties were summarized as shown in Table 3.

Comparative Example 2: Preparation of Polyisocyanate Composition PI-16

100 parts of HDI was weighed and charged into a 1 L four-necked glass flask equipped with a thermometer, a stirrer and a nitrogen seal tube. Air in the flask was replaced with nitrogen. The flask was heated to 60°C. 0.3846 parts of 2-EHOH was added and the mixture was stirred for 10 minutes. 50% i-BuOH solution of TMACA was added over 60 minutes until the content of TMACA reached 0.01 parts. The temperature was adjusted to 60 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-16. The obtained polyisocyanate composition was almost colorless

and transparent. The data on the physical properties of the polyisocyanate composition such as the NCO content, viscosity, and free HDI concentration, and the coating film physical properties were summarized as shown in Table 3.

Comparative Example 3: Preparation of Polyisocyanate Composition PI-17

100 parts of HDI was weighed and charged into a 1 L four-necked glass flask equipped with a thermometer, a stirrer and a nitrogen seal tube. Air in the flask was replaced with nitrogen. The flask was heated to 60°C. 2.5% i-BuOH solution of TMACA was added over 100 minutes until the content of TMACA reached 0.01 parts. The temperature was adjusted to 60 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-17. The obtained polyisocyanate composition was almost colorless and transparent. The data on the physical properties of the polyisocyanate composition such as the NCO content, viscosity, and free HDI concentration, and coating film physical properties were summarized as shown in Table 3.

Comparative Example 4: Preparation of Polyisocyanate Composition PI-18

100 parts of HDI was weighed and charged into a 1 L four-necked glass flask equipped with a thermometer, a stirrer and a nitrogen seal tube. Air in the flask was replaced with nitrogen. The flask was heated to 80°C. 8 parts of 2-EHOH was added and the mixture was stirred for 10 minutes. 50% i-BuOH solution of TMACA was added over 60 minutes until the content of TMACA reached 0.006 parts. The temperature was adjusted to 80 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-18. The obtained polyisocyanate composition was almost colorless and transparent. The data on the physical properties of the polyisocyanate composition such as the NCO content, viscosity, and free HDI concentration, and the coating film physical properties were summarized as shown in Table 3.

Comparative Example 5: Preparation of Polyisocyanate Composition PI-19

100 parts of HDI was weighed and charged into a 1 L four-necked glass flask equipped with a thermometer, a stirrer and a nitrogen seal tube. Air in the flask was replaced with nitrogen. The flask was heated to 90°C. 10 parts of 2-EHOH was added and the mixture was stirred for 10 minutes. 50% i-BuOH solution of TMACA was added over 60 minutes until the content of TMACA reached 0.006 parts. The temperature was adjusted to 90 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-19. The obtained polyisocyanate composition was almost colorless and transparent. The data on the physical properties of the polyisocyanate composition such as the NCO content, viscosity, and free HDI concentration, and the coating film physical properties were summarized as shown in Table 3.

Comparative Example 6: Preparation of Polyisocyanate Composition PI-20

100 parts of HDI was weighed and charged into a 1 L four-necked glass flask equipped with a thermometer, a stirrer and a nitrogen seal tube. Air in the flask was replaced with nitrogen. The flask was heated to 60°C. 9.1% i-BuOH solution of TMACA was added over 100 minutes until the content of TMACA reached 0.01 parts. The temperature was adjusted to 60 ± 2°C during the reaction. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-20. The obtained polyisocyanate composition was almost colorless and transparent. The data on the physical properties of the polyisocyanate composition such as the NCO content, viscosity, and free HDI concentration, and the coating film physical properties were summarized as shown in Table 3.

Example 14: Preparation of Polyisocyanate Composition PI-14

The polyisocyanate composition PI-15 prepared in Comparative Example 1 and the polyisocyanate composition PI-16 prepared in Comparative Example 2 were mixed in a mass ratio of PI-15:PI-16 = 33:67 to obtain a polyisocyanate composition PI-14. The obtained polyisocyanate composition was almost colorless and transparent. The data on the physical properties of the polyisocyanate compositions such as the NCO content, viscosity, and free HDI concentration, and the coating film physical properties were summarized as shown in Table 2.

Examples 15 to 26 (reference examples): Preparation of Polyisocyanate Compositions PI-21 to PI-32

Polyisocyanate compositions PI-21 to PI-32 were obtained in the same manner as in Example 1, except that the parameters including reaction temperature, catalyst amount, catalyst concentration and terminator addition temperature were adjusted as listed in Table 3. The obtained polyisocyanate compositions were almost colorless and transparent. The data on the physical properties of the polyisocyanate compositions such as the NCO content, viscosity, and free HDI concentration, and the coating film physical properties were summarized as shown in Table 4.

Example 27 (reference example): Preparation of Polyisocyanate Composition PI-33

100 parts of HDI was weighed and charged into a 1 L four-necked glass flask equipped with a thermometer, a stirrer and a nitrogen seal tube. Air in the flask was replaced with nitrogen. The flask was heated to 65°C. 25% i-BuOH solution of TMACA was added over 20 minutes until the content of TMACA reached 0.008 parts. The temperature was adjusted to 65 ± 2°C during the reaction. When the target NCO% was achieved, 0.016 parts of 85% aqueous phosphoric acid solution as a reaction terminator was added to raise the temperature to 150°C. The resultant mixture was continuously stirred for 30 minutes after reaching 150°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-33. The obtained polyisocyanate composition was almost colorless and transparent. The data on the physical properties of the polyisocyanate composition such as the NCO content, viscosity, and free HDI concentration, and the coating film physical properties were summarized as shown in Table 5.

Example 28 (reference example): Preparation of Polyisocyanate Composition PI-34

100 parts of HDI was weighed and charged into a 1 L four-necked glass flask equipped with a thermometer, a stirrer and a nitrogen seal tube. Air in the flask was replaced with nitrogen. The flask was heated to 65°C. 25% i-BuOH solution of TMACA was added over 20 minutes until the content of TMACA reached 0.008 parts. The temperature was adjusted to 65 ± 2°C during the reaction. When the target NCO% was achieved, 0.016 parts of 85% aqueous phosphoric acid solution as a reaction terminator was added to raise the temperature to 100°C. The resultant mixture was continuously stirred for 30 minutes after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-34. The obtained polyisocyanate composition was almost colorless and transparent. The data on the physical properties of the polyisocyanate composition such as the NCO content, viscosity, and free HDI concentration, and the coating film physical properties were summarized as shown in Table 5.

Examples 29 to 36 (examples 29 to 31 for reference): Preparation of Polyisocyanate Compositions PI-35 to PI-42

Polyisocyanate compositions PI-35 to PI-42 were obtained by blending various polyisocyanate compositions in the ratio listed in Table 4. The stated value of the ratio indicates a mass ratio. The obtained polyisocyanate compositions were almost colorless and transparent. The data on the physical properties of the polyisocyanate compositions such as the NCO content, viscosity, and free HDI concentration, and the coating film physical properties were summarized as shown in Table 5.

Example 37 (reference example): Preparation of Polyisocyanate Composition PI-43

100 parts of HDI was weighed and charged into a 1 L four-necked glass flask equipped with a thermometer, a stirrer and a nitrogen seal tube. Air in the flask was replaced with nitrogen. The flask was heated to 65°C. 50% i-BuOH solution of TMACA was added over 2 minutes until the content of TMACA reached 0.005 parts. After TMACA was completely added, a mixed alcohol of 0.35 parts of 2-EHOH and 0.109 parts of i-BuOH was added over 60 minutes. The

temperature was adjusted to 65 ± 2°C during the reaction. After the mixed alcohol was completely added, the temperature of the reaction solution was raised to 70°C. When the target NCO% was achieved, 0.012 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-43. The obtained polyisocyanate composition was almost colorless and transparent. The data on the physical properties of the polyisocyanate composition such as the NCO content, viscosity, and free HDI concentration, and the coating film physical properties were summarized as shown in Table 6.

Synthesis Example 1: Preparation of Polyisocyanate Composition UD-1 Having Uretdione Structure

2400 g of HDI was weighed and charged into a 3 L four-necked glass flask equipped with a thermometer, a stirrer and a nitrogen seal tube. Air in the flask was replaced with nitrogen. The flask was heated to 160°C. After the temperature reached 160°C, the mixture was continuously stirred for 2 hours and then cooled. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition UD-1 having the uretdione structure.

Example 38 (reference example): Preparation of Polyisocyanate Composition PI-44

A polyisocyanate composition PI-44 was obtained by blending the polyisocyanate composition PI-13 and the polyisocyanate composition UD-1 in the ratio listed in Table 6. The stated value of the ratio indicates a mass ratio. The obtained polyisocyanate compositions were almost colorless and transparent. The data on the physical properties of the polyisocyanate composition such as the NCO content, viscosity, and free HDI concentration, and the coating film physical properties were summarized as shown in Table 6.

Example 39: Preparation of Polyisocyanate Composition PI-45

100 parts of HDI was weighed and charged into a 1 L four-necked glass flask equipped with a thermometer, a stirrer and a nitrogen seal tube. Air in the flask was replaced with nitrogen. The flask was heated to 60°C. 50% i-BuOH solution of TMACA was added over 2 minutes until the content of TMACA reached 0.0025 parts. After TMACA was completely added, a mixed alcohol of 0.35 parts of 2-EHOH and 0.1315 parts of i-BuOH was added over 60 minutes. The temperature was adjusted to 60 ± 2°C during the reaction. After the mixed alcohol was completely added, the temperature of the reaction solution was raised to 70°C. When the target NCO% was achieved, 0.012 parts of 85% aqueous phosphoric acid solution as a reaction terminator was added. The resultant mixture was continuously stirred for 1 hour while maintaining 70°C. The reaction solution was a colorless and transparent liquid. The reaction solution was filtered through a membrane filter with a pore size of 1 μm to separate the reaction residue. Free HDI was distilled off with a thin-film distillation apparatus three times to obtain a polyisocyanate composition PI-45. The obtained polyisocyanate composition was almost colorless and transparent. The data on the physical properties of the polyisocyanate composition such as the NCO content, viscosity, and free HDI concentration, and the coating film physical properties were summarized as shown in Table 6.

Example 40: Preparation of Polyisocyanate Composition PI-46

100 parts of HDI was weighed and charged into a 1 L four-necked glass flask equipped with a thermometer, a stirrer, and a nitrogen seal tube. Air in the flask was replaced with nitrogen. The flask was heated to 85°C. 40% i-BuOH solution of TMACA was added over 100 minutes until the content of TMACA reached 0.01 parts. After TMACA was completely added, the temperature was kept at 85°C for 100 minutes, while the temperature was adjusted to 85 ± 2°C. Then, the temperature of the reaction solution was adjusted to 60°C. When the target NCO% was reached, 0.020 parts of 85% aqueous phosphoric acid solution as a reaction terminator was added to raise the temperature to 100°C. The resultant mixture was continuously stirred for 1 hour after reaching 100°C. The reaction solution was a colorless and transparent liquid. The reaction solution was filtered through a membrane filter with a pore size of 1 μm to separate the reaction residue. Free HDI was distilled off with a thin-film distillation apparatus to obtain a polyisocyanate composition PI-46. The obtained polyisocyanate composition was almost colorless and transparent. The data on the physical properties of the polyisocyanate composition such as the NCO content, viscosity, and free HDI concentration, and the coating film physical properties were summarized as shown in Table 6.

Example 41: Preparation of Polyisocyanate Composition PI-47

A polyisocyanate composition PI-47 was obtained by blending the polyisocyanate composition PI-13 and the polyisocyanate composition PI-18 in the ratio listed in Table 5. The stated value of the ratio indicates a mass ratio. The obtained polyisocyanate compositions were almost colorless and transparent. The data on the physical properties of the polyisocyanate composition such as the NCO content, viscosity, and free HDI concentration, and the coating film physical properties were summarized as shown in Table 6.

[Table 1]

| | | Example 1* | Example 2 | Example 3* | Example 4* | Example 5* | Example 6* | Example 7 |
|---|---|---|---|---|---|---|---|---|
| | | PI-1 | PI-2 | PI-3 | PI-4 | PI-5 | PI-6 | PI-7 |
| Reaction Temperature | | 65°C | 60°C | 55°C | 50°C | 50°C | 40°C | 40°C |
| Yield | | 40% | 40% | 40% | 40% | 40% | 40% | 40% |
| Catalyst Amount (ppm) | | 60 | 30 | 40 | 50 | 30 | 60 | 180 |
| Catalyst Temperature | | 5.0% | 2.6% | 3.4% | 4.2% | 2.6% | 5.0% | 47.0% |
| Terminator Addition Temperature | | 65°C | 60°C | 55°C | 50°C | 60°C | 40°C | 40°C |
| Post-treatment Condition | | 100°C/1h | 100°C/1h | 100°C/1h | 100°C/1h | 100°C/1h | 100°C/1h | 100°C/lh |
| Alcohol Amount (ppm) | Total | 4640 | 4640 | 4640 | 4640 | 5780 | 1140 | 203 |
| | Before Adding Catalyst | 3500 | 3500 | 3500 | 3500 | 3500 | 0 | 0 |
| | While Adding Catalyst | 1140 | 1140 | 1140 | 1140 | 1140 | 1140 | 203 |
| | After Adding Catalyst | 0 | 0 | 0 | 0 | 1140 | 0 | 0 |
| Physical Properties of Polyisocyanate Composition | Height Ratio of 1-Nylon (1-Nylon/ Trimer) | 0.23 | 20.3 | 22.0 | 24.0 | 26.0 | 21.0 | 20.0 |
| | Allophanate/Isocyanurate (molar ratio) | 5.5 | 5.6 | 5.6 | 5.6 | 6.4 | 1.9 | 0.4 |
| | Uretdione/Isocyanurate (molar ratio) | 0.30 | 0.40 | 0.40 | 0.40 | 0.40 | 0.40 | 0.40 |
| | NCO%(%) | 21.7 | 21.7 | 21.7 | 21.7 | 21.7 | 21.7 | 21.7 |
| | HDI Concentration (%) | 0.3 | 0.3 | 0.3 | 0.3 | 0.3 | 0.3 | 0.3 |
| | (Low) Viscosity (mPa·s) | 2300 | 2450 | 2450 | 2430 | 2250 | 2950 | 3500 |
| | Coloration Degree (APHA) | 20(B) | 17(B) | 15(B) | 14(A) | 14(A) | 13(A) | 14(A) |
| | Muddiness during Ethyl Acetate Dilution | A | B | C | C | C | C | B |

(continued)

| | | Example 1* | Example 2 | Example 3* | Example 4* | Example 5* | Example 6* | Example 7 |
|---|---|---|---|---|---|---|---|---|
| | | PI-1 | PI-2 | PI-3 | PI-4 | PI-5 | PI-6 | PI-7 |
| Physical Properties of Coating Film | Chemical Resistance | C | A | A | A | A | A | A |
| | Xylene Tolerance on Multilayer Coating Surface | C | B | B | B | B | B | B |
| | Xylene Swelling Resistance on Multilayer Coating Surface | C | B | B | B | B | B | B |
| * reference example | | | | | | | | |

[Table 2]

| | | Example 8 | Example 9* | Example 10 | Example 11* | Example 12 | Example 13 | Example 14 |
|---|---|---|---|---|---|---|---|---|
| | | PI-8 | PI-9 | PI-10 | PI-11 | PI-12 | PI-13 | PI-14 |
| Reaction Temperature | | 60°C | 60°C | 60°C | 65°C | 60°C | 60°C | PI-15/PI-16 =2/1 |
| Yield | | 40% | 40% | 40% | 40% | 39% | 39% | |
| Catalyst Amount (ppm) | | 30 | 60 | 30 | 50 | 25 | 25 | |
| Catalyst Temperature | | 5.0% | 10% | 35% | 50% | 50% | 50% | |
| Terminator Addition Temperature | | 60°C | 60°C | 60°C | 65°C | 60°C | 70°C | |
| Post-treatment Condition | | 100°C/1h | 100°C/1h | 100°C/1h | 100°C/1h | 100°C/1h | 100°C/1h | |
| Alcohol Amount (ppm) | Total | 4640 | 4640 | 4640 | 4640 | 4840 | 4840 | |
| | Before Adding Catalyst | 3500 | 3500 | 3500 | 0 | 0 | 0 | |
| | While Adding Catalyst | 570 | 570 | 56 | 50 | 25 | 25 | |
| | After Adding Catalyst | 570 | 570 | 1084 | 4590 | 4815 | 4815 | |
| Physical Properties of Polyisocyanate Composition | Height Ratio of 1-Nylon (1-Nylon/ Trimer) | 18.2 | 26.4 | 16.2 | 0.20 | 15.9 | 5.1 | 17.5 |
| | Allophanate/Isocyanurate (molar ratio) | 5.6 | 5.6 | 5.5 | 5.5 | 6.1 | 6.1 | 3.7 |
| | Uretdione/Isocyanurate (molar ratio) | 0.40 | 0.40 | 0.40 | 0.30 | 0.40 | 0.40 | 0.30 |
| | NCO%(%) | 21.7 | 21.7 | 21.7 | 21.7 | 21.7 | 21.7 | 22.5 |
| | (%) HDI Concentration (%) | 0.3 | 0.3 | 0.3 | 0.3 | 0.3 | 0.3 | 0.3 |
| | (Low) Viscosity (mPa·s) | 2350 | 2400 | 2360 | 2250 | 2250 | 2300 | 1900 |
| | Coloration Degree (APHA) | 16(B) | 17(B) | 16(B) | 19(B) | 16(B) | 16(B) | 18(B) |
| | Muddiness during Ethyl Acetate Dilution | B | C | B | A | B | A | B |

(continued)

| | | Example 8 | Example 9* | Example 10 | Example 11* | Example 12 | Example 13 | Example 14 |
|---|---|---|---|---|---|---|---|---|
| | | PI-8 | PI-9 | PI-10 | PI-11 | PI-12 | PI-13 | PI-14 |
| Physical Properties of Coating Film | Chemical Resistance | A | A | A | C | A | B | A |
| | Xylene Tolerance on Multilayer Coating Surface | B | B | B | C | B | B | B |
| | Xylene Swelling Resistance on Multilayer Coating Surface | B | B | B | C | B | B | B |

* reference example

[Table 3]

| | | Comparative Example 1 | Comparative Example 2 | Comparative Example 3 | Comparative Example 4 | Comparative Example 5 | Comparative Example 6 |
|---|---|---|---|---|---|---|---|
| | | PI-15 | PI-16 | PI-17 | PI-18 | PI-19 | PI-20 |
| Reaction Temperature | | 60°C | 60°C | 60°C | 80°C | 90°C | 60°C |
| Yield | | 38% | 25% | 23% | 36% | 47% | 24% |
| Catalyst Amount (ppm) | | 20 | 100 | 100 | 60 | 60 | 100 |
| Catalyst Temperature | | 2% | 50% | 2.5% | 50% | 50% | 9.1% |
| Terminator Addition Temperature | | 60°C | 60°C | 60°C | 80°C | 90°C | 60°C |
| Post-treatment Condition | | 100°C/1h | 100°C/1h | 100°C/1h | 100°C/1h | 100°C/1h | 100°C/1h |
| Alcohol Amount (ppm) | Total | 980 | 3946 | 3946 | 80060 | 100060 | 1000 |
| | Before Adding Catalyst | 0 | 3846 | 0 | 80000 | 100000 | 0 |
| | While Adding Catalyst | 980 | 100 | 3946 | 60 | 60 | 1000 |
| | After Adding Catalyst | 0 | 0 | 0 | 0 | 0 | 0 |
| Physical Properties of Polyisocyanate Composition | Height Ratio of 1-Nylon (1-Nylon/Trimer) | 0.05 | 54.2 | 98.9 | N.D. | N.D. | 30.5 |
| | Allophanate/Isocyanurate (molar ratio) | 1.8 | 7.6 | 10.1 | 420.0 | 340.0 | 2.7 |
| | Uretdione/Isocyanurate (molar ratio) | 0.30 | 0.40 | 0.40 | 0.40 | 0.40 | 0.40 |
| | NCO%(%) | 22.2 | 22.8 | 21.9 | 16.8 | 17.6 | 23.2 |
| | HDI Concentration (%) | 0.3 | 0.3 | 0.3 | 0.3 | 0.3 | 0.3 |
| | (Low) Viscosity (mPa·s) | 2500 | 1200 | 700 | 420 | 410 | 1500 |
| | Coloration Degree (APHA) | 16(B) | 23(B) | 24(B) | 30(C) | 32(D) | 23(B) |
| | Muddiness during Ethyl Acetate Dilution | B | D | D | A | A | D |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| | | PI-15 | PI-16 | PI-17 | PI-18 | PI-19 | PI-20 |
| Physical Properties of Coating Film | Chemical Resistance | D | C | C | D | D | B |
| | Xylene Tolerance on Multilayer Coating Surface | D | C | C | D | D | B |
| | Xylene Swelling Resistance on Multilayer Coating Surface | D | C | C | D | D | C |

[Table 4]

| | | Ex. 15* | Ex. 16* | Ex. 17* | Ex. 18* | Ex. 19* | Ex. 20* | Ex. 21* | Ex. 22* | Ex. 23* | Ex. 24* | Ex. 25* | Ex. 26* |
|---|---|---|---|---|---|---|---|---|---|---|---|---|---|
| | | PI-21 | PI-22 | PI-23 | PI-24 | PI-25 | PI-26 | PI-27 | PI-28 | PI-29 | PI-30 | PI-31 | PI-32 |
| Reaction Temperature | | 62°C | | | | 62°C | | | | 62°C | | | |
| Yield | | 39% | 38% | 38% | 38% | 39% | 39% | 39% | 39% | 40% | 40% | 40% | 39% |
| Catalyst Amount (ppm) | | 40 | | | | 40 | | | | 40 | | | |
| Catalyst Temperature | | 5% | | | | 5% | | | | 5% | | | |
| Terminator Addition Temperature | | 65°C | | | | 65°C | | | | 65°C | | | |
| Post-treatment Condition | | 100°C/30 min. | | | | 100°C/30 min. | | | | 100°C/30 min. | | | |
| Icohol Amount (ppm) | Total | 8000 | 4200 | 3100 | 1500 | 8000 | 4200 | 3100 | 1500 | 8000 | 4200 | 3100 | 1500 |
| | Before Adding Catalyst | 7240 | 3440 | 2340 | 740 | 7240 | 3440 | 2340 | 740 | 7240 | 3440 | 2340 | 740 |
| | While Adding Catalyst | 760 | 760 | 760 | 760 | 760 | 760 | 760 | 760 | 760 | 760 | 760 | 760 |
| | After Adding Catalyst | 0 | 0 | 0 | 0 | 0 | 0 | 0 | 0 | 0 | 0 | 0 | 0 |
| Physical Properties of Polyisocyanate Composition | Height Ratio of 1-Nylon (1-Nylon/Trimer) | 0.6 | 0.6 | 0.7 | 0.7 | 0.6 | 0.6 | 0.6 | 0.7 | 0.5 | 0.6 | 0.6 | 0.6 |
| | Allophanate/Isocyanurate (molar ratio) | 10 | 5.5 | 40 | 2.0 | 10 | 5.4 | 3.9 | 1.9 | 10 | 5.2 | 3.8 | 1.9 |
| | Uretdione/Isocyanurate (molar ratio) | 0.5 | 0.5 | 0.5 | 0.5 | 50 | 5.1 | 5.1 | 50 | 11 | 12 | 11 | 12 |
| | NCO%(%) | 21.7 | 21.9 | 21.9 | 22.0 | 21.8 | 21.9 | 22.0 | 22.0 | 21.9 | 22.0 | 22.1 | 22.1 |
| | HDI Concentration (%) | 0.2 | 0.3 | 0.2 | 0.2 | 0.2 | 0.3 | 0.2 | 0.2 | 0.3 | 0.2 | 0.3 | 0.2 |
| | (Low) Viscosity (mPa·s) | 2050 | 2200 | 2250 | 2310 | 1840 | 1980 | 2030 | 2080 | 1640 | 1760 | 1800 | 1850 |
| | Coloration Degree (APHA) | 18(B) | 21(B) | 25(C) | 25(C) | 20(B) | 23(B) | 26(C) | 27(C) | 21(B) | 24(B) | 27(C) | 28(C) |
| | Muddiness during Ethyl Acetate Dilution | A | A | B | B | A | A | B | B | A | A | A | A |

(continued)

| | | Ex. 15* | Ex. 16* | Ex. 17* | Ex. 18* | Ex. 19* | Ex. 20* | Ex. 21* | Ex. 22* | Ex. 23* | Ex. 24* | Ex. 25* | Ex. 26* |
|---|---|---|---|---|---|---|---|---|---|---|---|---|---|
| | | PI-21 | PI-22 | PI-23 | PI-24 | PI-25 | PI-26 | PI-27 | PI-28 | PI-29 | PI-30 | PI-31 | PI-32 |
| Physical Properties of Coating Film | Chemical Resistance | C | C | C | C | C | C | C | C | C | C | C | C |
| | Xylene Tolerance on Multilayer Coating Surface | C | C | C | C | C | C | C | C | C | C | C | C |
| | Xylene Swelling Resistance on Multilayer Coating Surface | C | C | C | C | C | C | C | C | C | C | C | C |
| * reference example | | | | | | | | | | | | | |

[Table 5]

| | | Ex.27* | Ex.28* | Ex.29* | Ex.30* | Ex.31* | Ex.32 | Ex.33 | Ex.34 | Ex.35 | Ex.36 |
|---|---|---|---|---|---|---|---|---|---|---|---|
| | | PI-33 | PI-34 | PI-35 | PI-36 | PI-37 | PI-38 | PI-39 | PI-40 | PI-41 | PI-42 |
| Reaction Temperature | | 65°C | | PI-33/PI-34 =1/4 | PI-32/PI-24 =1/4 | PI-31/PI-23 =1/4 | PI-1/PI-13 =4/1 | PI-1/PI-13 =3/7 | PI-26/PI-38 =1/4 | PI-10/PI-26 =1/19 | PI-10/PI-30 =1/19 |
| Yield | | 38% | 38% | | | | | | | | |
| Catalyst Amount (ppm) | | 80 | 80 | | | | | | | | |
| Catalyst Temperature | | 25% | | | | | | | | | |
| Terminator Addition Temperature | | 65°C | | | | | | | | | |
| Post-treatment Condition | | 150°C/ 30 min. | 100°C/ 30 min. | | | | | | | | |
| Alcohol Amount (ppm) | Total | 240 | 240 | | | | | | | | |
| | Before Adding Catalyst | 0 | 0 | | | | | | | | |
| | While Adding Catalyst | 240 | 240 | | | | | | | | |
| | After Adding Catalyst | 0 | 0 | | | | | | | | |
| Physical Properties of Polyisocyanate Composition | Height Ratio of 1-Nylon (1-Nylon/Trimer) | 0.3 | 0.3 | 0.3 | 0.6 | 0.6 | 1.2 | 3.6 | 1.1 | 1.9 | 2.0 |
| | Allophanate/Isocyanurate (molar ratio) | 0.2 | 0.2 | 0.2 | 2.0 | 4.0 | 5.6 | 5.9 | 5.6 | 5.4 | 5.2 |
| | Uretdione/Isocyanurate (molar ratio) | 10 | 0.5 | 2.3 | 2.3 | 2.3 | 0.3 | 0.4 | 1.3 | 4.9 | 11 |
| | NCO%(%) | 22.2 | 22.0 | 22.0 | 22.0 | 21.9 | 21.7 | 21.7 | 21.7 | 21.9 | 22.0 |
| | HDI Concentration (%) | 0.2 | 0.2 | 0.2 | 0.2 | 0.2 | 0.3 | 0.4 | 0.3 | 0.3 | 0.2 |
| | (Low) Viscosity (mPa·s) | 1900 | 2400 | 2250 | 2200 | 2150 | 2290 | 2290 | 2200 | 2020 | 1790 |
| | Coloration Degree (APHA) | 30(C) | 26(C) | 27(C) | 26(C) | 25(C) | 19(B) | 17(B) | 20(B) | 22(B) | 24(B) |
| | Muddiness during Ethyl Acetate Dilution | B | C | B | B | B | A | A | B | A | A |

(continued)

| | | Ex.27* | Ex.28* | Ex.29* | Ex.30* | Ex.31* | Ex.32 | Ex.33 | Ex.34 | Ex.35 | Ex.36 |
|---|---|---|---|---|---|---|---|---|---|---|---|
| | | PI-33 | PI-34 | PI-35 | PI-36 | PI-37 | PI-38 | PI-39 | PI-40 | PI-41 | PI-42 |
| Physical Properties of Coating | Chemical Resistance | C | C | C | C | C | B | B | B | B | B |
| | Xylene Tolerance on Multilayer Coating Surface | C | C | C | C | C | B | B | A | A | A |
| | Film Xylene Swelling Resistance on Multilayer Coating Surface | C | C | C | C | C | B | B | B | A | A |
| * reference example | | | | | | | | | | | |

[Table 6]

| | | Example 37* | Example 38* | Example 39 | Example 40 | Example 41 |
|---|---|---|---|---|---|---|
| | | PI-43 | PI-44 | PI-45 | PI-46 | PI-47 |
| Reaction Temperature | | 65°C | PI-13/UD-1 =72/28 | 60°C | 85°C→60°C | PI-13/PI-18 =65/35 |
| Yield | | 40% | | 39% | 38% | |
| Catalyst Amount (ppm) | | 50 | | 25 | 100 | |
| Catalyst Temperature | | 50% | | 50% | 40% | |
| Terminator Addition Temperature | | 70°C | | 70°C | 60°C | |
| Post-treatment Condition | | 100°C/1h | | 70°C/ 30min | 100°C/lh | |
| Alcohol Amount (ppm) | Total | 4640 | | 4840 | 150 | |
| | Before Adding Catalyst | 0 | | 0 | 0 | |
| | While Adding Catalyst | 50 | | 25 | 150 | |
| | After Adding Catalyst | 4590 | | 4815 | 0 | |
| Physical Properties of Polyisocyanate Composition | Height Ratio of 1-Nylon (1-Nylon/Trimer) | 0.12 | 5.1 | 5.5 | 1.9 | 4.6 |
| | Allophanate/ Isocyanurate (molar ratio) | 5.6 | 6.1 | 6.1 | 0.1 | 49 |
| | Uretdione/Isocyanurate (molar ratio) | 0.40 | 41.5 | 0.01 | 0.40 | 0.4 |
| | NCO%(%) | 21.7 | 22.5 | 21.8 | 22.0 | 20.0 |
| | HDI Concentration (%) | 0.3 | 0.2 | 0.2 | 0.2 | 0.3 |
| | (Low) Viscosity (mPa·s) | 2300 | 400 | 2650 | 2450 | 1500 |
| | Coloration Degree (APHA) | 19(B) | 22(B) | 21(B) | 25(C) | 21(B) |
| | Muddiness during Ethyl Acetate Dilution | A | A | A | B | A |
| Physical Properties of Coating Film | Chemical Resistance | C | B | B | B | B |
| | Xylene Tolerance on Multilayer Coating Surface | C | B | B | B | B |
| | Xylene Swelling Resistance on Multilayer Coating Surface | C | C | C | C | C |
| * reference example | | | | | | |

According to Tables 1 to 6, in a case of a coating film using a polyisocyanate composition having (B)/(A) falling within a range of 0.1 to 30 as shown in each of Examples 1 to 41, muddiness when diluted with ethyl acetate which is a solvent is very low, while chemical resistance, xylene tolerance of the multilayer coating film and xylene swelling resistance of the whole multilayer coating film were good.

Meanwhile, in a case of a coating film using a polyisocyanate composition having (B)/(A) of less than 0.1 or more than 30 as shown in each of Comparative Examples 1 to 6, there was no coating film of which solvent dilutability, chemical resistance, xylene tolerance of the multilayer coating film and xylene swelling resistance of the whole multilayer coating film had no problem in practical use.

Moreover, in a case of the coating film using the polyisocyanate composition having (B)/(A) falling within a range of 1 to 30 as shown in each of Examples 2 to 10, 12 to 14, 32 to 36 and 38 to 41, chemical resistance and xylene tolerance of the multilayer coating film were particularly good.

Furthermore, in a case of the coating film using the polyisocyanate composition having (B)/(A) of 0.1 or more and less than 1.0 as shown in each of Examples 1, 11, 15 to 28 and 37, the coating film having (Y)/(X) falling within a range of 5/100 to 10/100 and (Z)/(X) falling within a range of 0.3/100 to 12/100 as shown in each of Examples 1, 11, 15, 16, 19, 20, 23, 24 and 37 had particularly good solvent reducibility while keeping the physical properties of the resultant coating film at a practically acceptable level.

Industrial Applicability

According to the polyisocyanate composition of the present embodiment, it is possible to obtain excellent solvent reducibility when used as a coating curing agent and to provide good coating film physical properties including chemical resistance. In addition, the polyisocyanate composition of the present embodiment is useful as coatings, adhesives, sealing materials, waterproof materials, foams, elastomers, and fiber treatment agents.

## Claims

**1.** A polyisocyanate composition, which is derived from 1,6-hexamethylene diisocyanate, comprising:

an isocyanurate structure, and
a multimer derived from 1-nylon compound having UV-absorption in a region corresponding to diisocyanate undecamer or higher-order multimers at a retention time of less than 10 minutes in a spectrum measured by gel permeation chromatography as described in "(3) Measurement of Height Ratio of UV-Absorption Peak" in the description, and
a height ratio (B)/(A) of a UV-absorption peak height (B) of the multimer derived from 1-nylon compound to a UV-absorption peak height of a diisocyanate trimer equivalent (A) at a retention time of 11.7 minutes in the spectrum is in a range of 1.0 to 20.5
wherein the polyisocyanate composition is prepared by isocyanurating the diisocyanate with an isocyanurate catalyst while adding an alcohol continuously, and
wherein a molar ratio (Z)/(X) of an uretdione structure (Z) to the isocyanurate structure (X) is in a range of 0.01/100 to 40/100.

**2.** The polyisocyanate composition according to claim 1,
wherein a molar ratio (Y)/(X) of an allophanate structure (Y) to the isocyanurate structure (X) is in a range of 0.1/100 to 50/100.

**3.** The polyisocyanate composition according to claim 2,
wherein the molar ratio (Y)/(X) of the allophanate structure (Y) to the isocyanurate structure (X) is in a range of 1/100 to 50/100.

**4.** The polyisocyanate composition according to any one of claims 1 to 3,
wherein the molar ratio (Z)/(X) of the uretdione structure (Z) to the isocyanurate structure (X) is in a range of 0.01/100 to 1/100.

**5.** The polyisocyanate composition according to any one of claims 1 to 3,
wherein a molar ratio (Y)/(X) of the allophanate structure (Y) to the isocyanurate structure (X) is in a range of 5/100 to 50/100, and the molar ratio (Z)/(X) of the uretdione structure (Z) to the isocyanurate structure (X) is in a range of 0.4/100 to 40/100.

**6.** A coating composition comprising:

the polyisocyanate composition according to any one of claims 1 to 5; and
a polyol composition.

## Patentansprüche

1. Polyisocyanat-Zusammensetzung, die von 1,6-Hexamethylendiisocyanat abgeleitet ist, umfassend:

   eine Isocyanurat-Struktur, und
   ein von einer 1-Nylon-Verbindung abgeleitetes Multimer, welches eine UV-Absorption in einem Bereich aufweist, der einem Diisocyanat-Undecamer oder Multimeren höherer Ordnung entspricht, bei einer Retentionszeit von weniger als 10 Minuten in einem mittels Gelpermeationschromatographie gemessenen Spektrum, wie unter "(3) Messung des Höhenverhältnisses des UV-Absorptionspeaks" in der Beschreibung beschrieben, wobei ein Höhenverhältnis (B)/(A) einer UV-Absorptionspeakhöhe (B) des von der 1-Nylon-Verbindung abgeleiteten Multimers zu einer UV-Absorptionspeakhöhe eines Diisocyanat-Trimer-Äquivalents (A) bei einer Retentionszeit von 11,7 Minuten in dem Spektrum in einem Bereich von 1,0 bis 20,5 liegt,
   wobei die Polyisocyanatzusammensetzung durch Isocyanuratieren des Diisocyanats mit einem Isocyanurat-Katalysator unter kontinuierlicher Zugabe eines Alkohols hergestellt wird, und
   wobei das molare Verhältnis (Z)/(X) einer Uretdionstruktur (Z) zu der Isocyanuratstruktur (X) in einem Bereich von 0,01/100 bis 40/100 liegt.

2. Polyisocyanat-Zusammensetzung nach Anspruch 1,
   wobei das molare Verhältnis (Y)/(X) einer Allophanatstruktur (Y) zu der Isocyanuratstruktur (X) in einem Bereich von 0,1/100 bis 50/100 liegt.

3. Polyisocyanat-Zusammensetzung nach Anspruch 2,
   wobei das molare Verhältnis (Y)/(X) der Allophanatstruktur (Y) zu der Isocyanuratstruktur (X) in einem Bereich von 1/100 bis 50/100 liegt.

4. Polyisocyanat-Zusammensetzung nach einem der Ansprüche 1 bis 3,
   wobei das molare Verhältnis (Z)/(X) der Uretdionstruktur (Z) zu der Isocyanuratstruktur (X) in einem Bereich von 0,01/100 bis 1/100 liegt.

5. Polyisocyanat-Zusammensetzung nach einem der Ansprüche 1 bis 3,
   wobei das molare Verhältnis (Y)/(X) der Allophanatstruktur (Y) zu der Isocyanuratstruktur (X) in einem Bereich von 5/100 bis 50/100 liegt und das molare Verhältnis (Z)/(X) der Uretdionstruktur (Z) zu der Isocyanuratstruktur (X) in einem Bereich von 0,4/100 bis 40/100 liegt.

6. Beschichtungszusammensetzung, umfassend:

   die Polyisocyanat-Zusammensetzung nach einem der Ansprüche 1 bis 5; und
   eine Polyolzusammensetzung.

## Revendications

1. Composition de polyisocyanate, qui est dérivée de diisocyanate de 1,6-hexaméthylène, comprenant :

   une structure isocyanurate, et
   un multimère dérivé d'un composé de nylon-1 présentant une absorption des UV dans une région correspondant à un undécamère de diisocyanate ou à des multimères d'ordre supérieur à un temps de rétention inférieur à 10 minutes dans un spectre mesuré par chromatographie par perméation sur gel tel que décrit dans « (3) Mesure du rapport de hauteurs du pic d'absorption d'UV » dans la description, et
   un rapport de hauteurs (B)/(A) d'une hauteur de pic d'absorption d'UV (B) du multimère dérivé de composé de nylon-1 à une hauteur de pic d'absorption d'UV d'un équivalent trimère de diisocyanate (A) à un temps de rétention de 11,7 minutes dans le spectre est dans une plage de 1,0 à 20,5
   dans laquelle la composition de polyisocyanate est préparée par isocyanuration du diisocyanate avec un catalyseur d'isocyanurate tout en ajoutant un alcool de manière continue, et
   dans laquelle un rapport molaire (Z)/(X) d'une structure uretdione (Z) à la structure isocyanurate (X) est dans une plage de 0,01/100 à 40/100.

2. Composition de polyisocyanate selon la revendication 1, dans laquelle un rapport molaire (Y)/(X) d'une structure

allophanate (Y) à la structure isocyanurate (X) est dans une plage de 0,1/100 à 50/100.

**3.** Composition de polyisocyanate selon la revendication 2, dans laquelle le rapport molaire (Y)/(X) de la structure allophanate (Y) à la structure isocyanurate (X) est dans une plage de 1/100 à 50/100.

**4.** Composition de polyisocyanate selon l'une quelconque des revendications 1 à 3,
dans laquelle le rapport molaire (Z)/(X) de la structure uretdione (Z) à la structure isocyanurate (X) est dans une plage de 0,01/100 à 1/100.

**5.** Composition de polyisocyanate selon l'une quelconque des revendications 1 à 3, dans laquelle un rapport molaire (Y)/(X) de la structure allophanate (Y) à la structure isocyanurate (X) est dans une plage de 5/100 à 50/100, et le rapport molaire (Z)/(X) de la structure uretdione (Z) à la structure isocyanurate (X) est dans une plage de 0,4/100 à 40/100.

**6.** Composition de revêtement comprenant :

la composition de polyisocyanate selon l'une quelconque des revendications 1 à 5 ; et
une composition de polyol.

*FIG. 1*

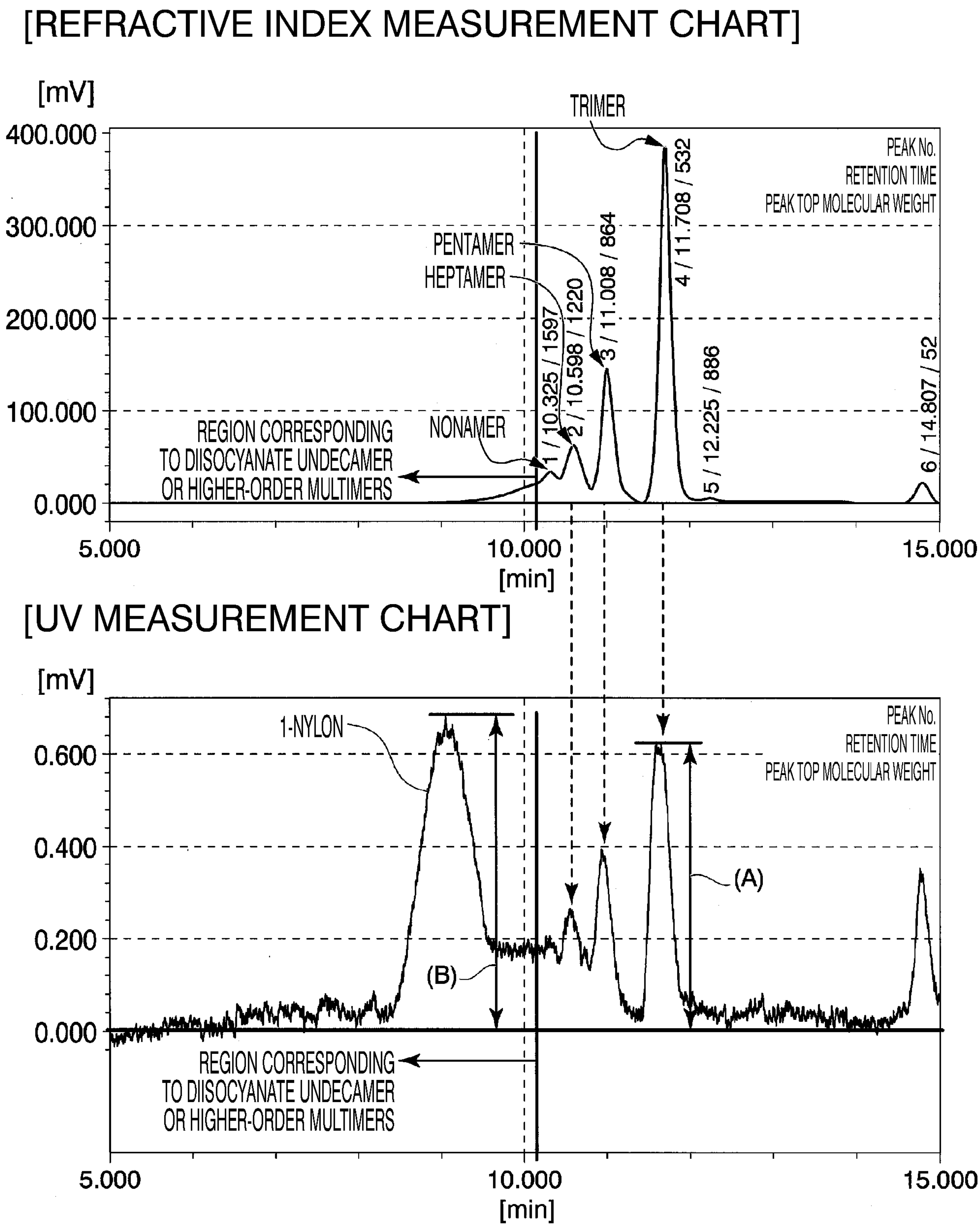
[REFRACTIVE INDEX MEASUREMENT CHART]
[mV]
400.000
300.000
200.000
100.000
0.000
TRIMER
PENTAMER
HEPTAMER
NONAMER
PEAK No.
RETENTION TIME
PEAK TOP MOLECULAR WEIGHT
1 / 10.325 / 1597
2 / 10.598 / 1220
3 / 11.008 / 864
4 / 11.708 / 532
5 / 12.225 / 886
6 / 14.807 / 52
REGION CORRESPONDING
TO DIISOCYANATE UNDECAMER
OR HIGHER-ORDER MULTIMERS
5.000
10.000
15.000
[min]
[UV MEASUREMENT CHART]
[mV]
0.600
0.400
0.200
0.000
1-NYLON
PEAK No.
RETENTION TIME
PEAK TOP MOLECULAR WEIGHT
(A)
(B)
REGION CORRESPONDING
TO DIISOCYANATE UNDECAMER
OR HIGHER-ORDER MULTIMERS
5.000
10.000
15.000
[min]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4201582 B
- JP 5178200 B
- JP 5183206 B
- JP 3065889 B
- JP 58162581 A
- JP 2002241458 A
- EP 1939232 A1
- WO 2015166983 A1
- JP S58162581 A
- US 4345057 A
- EP 180962 A